# EUROPÄISCHE PATENTSCHRIFT

(11) **EP 1 486 685 B1**
(45) Veröffentlichungstag und Bekanntmachung des Hinweises auf die Patenterteilung: **13.09.2006**
(21) Anmeldenummer: 04013350.6
(22) Anmeldetag: 07.06.2004
(51) Int. Cl.: F16B 31/04

(54) **Kraft reduzierendes Spannmittel und seine Verwendung in Befestigungsvorrichtungen**
Strength reducing clamping means and its use in mounting devices
Moyen de tension à réduire des forces et son utilisation en montant des dispositifs

(30) Priorität: 12.06.2003 EP 03013208
(43) Veröffentlichungstag der Anmeldung: 15.12.2004
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- GB-A- 980 090

## Beschreibung

Die Erfindung betrifft eine Befestigungsvorrichtung zum Verspannen von Bauteilen. Die Befestigungsvorrichtung umfasst erfindungsgemäß neuartige Spannmuttern bzw. Spannringe mit deren Hilfe Bauteile, welche mittels relativ große Befestigungselemente, wie z.B. Bolzen, miteinander verbunden werden sollen, unter Einsatz verhältnismäßig geringer und einstellbarer Kräfte fest verspannt werden können.

Die Befestigung von Bauteilen und -Elementen kann auf verschiedene Art und Weise bewerkstelligt werden. Eine sehr gebräuchliche Methode ist, insbesondere dann, wenn die Elemente gegebenenfalls wieder gelöst werden sollen, der Einsatz von Schrauben, welche durch Bohrungen in den betreffenden Elementen geführt werden und auf die dann Schraubmuttern aufgeschraubt werden. Durch Drehen wird die Schraubmutter axial zum Schraubbolzen bewegt, und es kann durch Aufbringung eines gewünschten Drehmomentes eine bestimmte zu erzielende Spannung erreicht werden. Das erforderliche Drehmoment kann dabei entweder am Bolzenkopf oder an der Spannmutter erzeugt werden.

Probleme hinsichtlich der aufzubringenden großen Drehmomente ergeben sich, wenn Schrauben mit Durchmessern von etwa 30 mm und mehr eingesetzt werden sollen. Um derartige Schrauben bzw. Schraubbolzen fest anzuziehen, werden lange Hebelarme und / oder große Kräfte benötigt. Beides ist in der Regel unpraktisch oder im konkreten Fall technisch nicht realisierbar.
So kann beispielsweise eine Schraube mit 36 mm Durchmesser (M36), bestehend aus einem Material mit hoher Festigkeit, entsprechend ihrer Elastizität mit etwa 400 kN (das entspricht 40 Tonnen) vorgespannt werden. Dazu würde bei normaler Anwendung ein Anzugs-, bzw. - Drehmoment von rund 2.600 Nm aufgebracht werden müssen. Dies entspräche einer Kraft von 260 kg an einem 1 m langen Hebel bzw. Schraubenschlüssel.
Bei einer entsprechenden notwendigen Vorspannung von 2.400 kN (entspricht 240 Tonnen) eines Schraubbolzens von 72 mm Durchmesser (M72) ist ein Anzugsdrehmoment von etwa 30.000 Nm notwendig, was bei einem Hebelarm von 1 m eine einzusetzende Kraft von 3.000N (3 Tonnen) bedeuten würde.

Derartig große Kräfte können aber von einer Person unter Benutzung eines üblichen Spann-, bzw. - Schraubschlüssels bei weitem nicht aufgebracht werden. Überdies sind Spannschlüssel mit einer Länge von über 500 mm oder gar 1000 mm Länge meist nicht praktikabel.

Im Stand der Technik werden, um dem Problem beizukommen, verschiedene Lösungen angeboten. So kann die aufzuwendende Kraft durch Einsatz von Drehmomentübersetzern reduziert werden. Diese bestehen im wesentlichen aus einem Übersetzungsgetriebe mit Gegenlager. Ferner besteht die Möglichkeit Schrauben oder Muttern mittels hydraulischer Anzugsgeräte vorzuspannen. Hierzu wird die Mutter/Schraube mit kleinem ohne besondere Hilfsmittel aufzubringendem Drehmoment vorgespannt bzw. angezogen. Nach Entlastung der Hydraulik ist die Mutter/Schraube dann voll angespannt. Der Nachteil dieser bekannten Systeme besteht darin, dass zur Durchführung relativ schwere, große, wenig mobile und auch technisch und materiell aufwendige und somit teure Geräte erforderlich sind.

Eine andere Möglichkeit die beim Anspannen von Schrauben mit großen Durchmessern notwendigen Kräfte zu reduzieren, besteht darin mehrere kleine Schrauben aus besonders festem Werkstoff, die im Umfang der Schraubmutter angebracht sind, gegen eine druckfeste Unterlegscheibe aus hochfestem Werkstoff zu spannen, wodurch die eigentliche Schraube fest verspannt wird. Durch Verwendung relativ kleiner Schrauben mit kleinen Durchmessern und somit auch kleineren Auflageflächen können bei relativ geringen Kräften hohe Drucke erzielt werden. Ein solche Spanvorrichtung ist beispielsweise aus der DE 35 10 926 bekannt. Hier wird die insgesamt aufzubringende hohe Kraft entsprechend der Anzahl der kleineren Schrauben mit geringerem erforderlichen Drehmoment verteilt. Der Nachteil eines derartigen Systems besteht jedoch darin, dass an die Festigkeit und Dauerhaftigkeit der beteiligten Elemente, insbesondere Schrauben und Druckscheiben, hohe Anforderungen gestellt werden müssen. Ferner treten Probleme auf, falls die hergestellte Verbindung ungleichen statischen (Schiefstellung der Elemente) oder dynamischen (Bewegung/Beschleunigungskräfte) Belastungen ausgesetzt ist. So ist es bei diesem System unbedingt erforderlich, die Drehmomente der kleineren Schrauben gleichmäßig, d.h. rotationssymmetrisch auf dem Umkreis der Mutter und streng axial zum Verbindungsbolzen zu verteilen, da ansonsten unerwünschte kardanische Kräfte auftreten.

Aus der GB 980,090 ist eine Vorrichtung zur Erleichterung des Festziehens von Muttern und Bolzen bekannt, welche eine Mutter mit Schraubgewinde umfasst, die in ihrem Inneren in einem ringförmigen Hohlraum ein entsprechend geformtes, verbiegbares aber im wesentlichen nicht komprimierbares Material enthält, welches wiederum über axial angeordneten Schrauben zugänglich ist. Durch Eindrehen der Schrauben wird das Material verbogen und so ein Druck ausgeübt, der letztlich bewirkt, dass zwischen Mutter und den zu verspannenden Bauteilen ein Spalt entsteht, in den ein Abstandsring eingeschoben werden kann, welcher durch Entlastung der Schrauben verklemmt wird. Hierdurch werden Mutter und Bolzen gegeneinander verspannt. Auch bei diesem System wird der erzeugte Druck nicht nach allen Richtungen gleichmäßig weitergegeben, so dass Probleme, die bei einseitigen Belastungen oder Verkantungen entstehen, durch diese Prinzip nicht gelöst werden.

Es bestand somit die Aufgabe, verbesserte Spannmittel, bzw. Befestigungsvorrichtungen zur Verfügung zu stellen, welche einerseits das Verspannen von Bauteilen mit reduziertem Kraftaufwand und einfachen technischen Hilfsmitteln erleichtert, andrerseits aber nicht die Nachteile der oben genannten bekannten Lösungen des Standes der Technik aufweisen.

Die Aufgabe wird erfindungsgemäß durch die unten spezifizierten Ansprüche sowie die Beschreibung gelöst.
Die erfindungsgemäßen Befestigungsvorrichtungen weisen neuartige Spannmittel, vorzugsweise Spannmuttern bzw. Spannringe, welche elastomere Elemente, vorzugsweise in Form von elastomeren Scheiben und / oder Ringen enthalten. Ferner weisen die besagten Spannelemente Bohrungen auf, welche weitere Spannelemente, vorzugsweise Schrauben von kleinen Durchmessern, gegebenenfalls in Kombination mit Druckstiften oder - Bolzen, aufnehmen können. Diese Schrauben/Bohrungen sind im Körper der Spannmutter /Spannrings angebracht und geben den erzeugten Druck gleichmäßig auf die elastomere Schicht weiter, welche wiederum die Kräfte auf eine abschließende Druckscheibe übertragen. Hierdurch wird eine feste Verspannung des Bauteile bewirkt. Die elastomere Schicht oder Scheibe gibt den Druck nach allen Richtungen analog eines hydraulischen Systems gleichmäßig weiter, so dass es, im Gegensatz zur technischen Lösung der DE 35 10 926, nicht zur Gefahr von einseitigen Belastungen oder Verkantungen kommen kann. Überdies ist es unerheblich, ob die Spannschrauben /Bohrungen streng axial zum die Bauteile verbindenden Bolzen angeordnet sind oder nicht. Beim erfindungsgemäßen System können die Bohrungen bzw. die entsprechenden kleineren Spannschrauben in jeder Richtung des Mutterngehäuses, also auch beispielsweise radial zum zentralen Spannbolzen angebracht sein. Aus dem gleichen Grund genügt unter Umständen nur eine Schraube um den Effekt und die damit verbundenen Vorteile zu erzielen, wobei trotz fehlender Symmetrie in dieser Anordnung keine Nachteile durch Quer- oder kardanische Kräfte auftreten.
Bei der erfindungsgemäßen Vorrichtung sind das einzusetzende Gesamt-Anzugsdrehmomente streng proportional zur Fläche der belasteten Elastomerschicht (im Gegensatz zum System aus DE 35 10 926). Somit kann durch Schrauben / Bohrungen mit unterschiedlich gewählten Durchmessern die Spannmutter / Spannring sukzessive mit einem Anzugsdrehmoment, das einen gewünschten Oberwert nicht überschreitet, letztlich vollkommen fest angezogen werden. Gegenstand der Erfindung ist somit eine Befestigungs- bzw. Spannvorrichtung zur festen Verspannung von Bauteilen (7), bestehend im wesentlichen aus einem Spannbolzen (5) mit Bolzenkopf (5a), Schaft (5b) und einem endständigem Gewinde (5c) sowie einem Kraft reduzierenden Spannmittel (1), wobei die Bauteile (7) passende Bohrungen zur Aufnahme des Spannbolzens aufweisen.

Gegenstand der Erfindung ist somit eine Befestigungsvorrichtung zum Verspannen von Bauteilen (7), bestehend im wesentlichen aus einem Spannbolzen (5) mit Bolzenkopf (5a), Schaft (5b) und einem endständigem Gewinde (5c) sowie einem Kraft reduzierenden Spannmittel (1), wobei die Bauteile (7) passende Bohrungen zur Aufnahme des Spannbolzens aufweisen, und das Kraft reduzierende Spannmittel die Form eines Profil-Hohlkörpers (1a) hat, welcher eine zentrisch angeordnete durchgehenden Bohrung aufweist, und in dessen Peripherie eine oder mehrere Bohrungen (c) angeordnet sind, die selbst Spannelemente (2, 3) aufweisen, welche beim Verspannen mit einer Elastomerschicht (4) in Kontakt stehen. Diese Befestigungsvorrichtung zeichnet sich erfindungsgemäß dadurch aus, dass der Durchmesser der besagten zentrisch angeordneten durchgehenden Bohrung des Profil-Hohlkörpers (1a) sich innerhalb des Werkstückes so verändert, dass zwei zylindrische, ineinander übergehende Hohlräume (a, b) mit unterschiedlichen Durchmessern vorliegen, wobei der auf der den zu verspannenden Bauteilen abgewandten Fläche des Spannmittels (1) befindliche zylindrische Hohlraum (a) einen kleineren Durchmesser zur passenden Aufnahme des Spannbolzens (5) aufweist, und die andere auf der den zu verspannenden Bauteilen zugewandten Seite befindliche Bohrung (b) eine größeren Durchmesser aufweist und einen ringförmigen Hohlraum (b') mit besagtem eingeführten Spannbolzen bildet, in welchem mindestens eine besagte elastomere Schicht oder Scheibe (4) untergebracht ist, welche mit einer zentrischen Bohrung im Durchmesser des Spannbolzens (5) versehen ist und die Bohrungen (c), die in besagtem ringförmigen Hohlraum (b') enden, abschließt.

Gegenstand der Erfindung ist aber auch das entsprechende Spannmittel selbst in Form eines Profil-Hohlkörpers (1a) mit einer zentrisch angeordneten durchgehenden Bohrung (a), und eine oder mehrere Bohrungen (c), welche längs, schräg oder senkrecht zu dieser auf einem Umkreis des Spannmittels angeordnet sind und Spannelemente (2, 3) aufnehmen, wobei erfindungsgemäß der Durchmesser der besagten zentrisch angeordneten durchgehenden Bohrung (a) des Profil-Hohlkörpers (1a) sich innerhalb des Werkstückes so verändert, dass zwei zylindrische, ineinander übergehende Hohlräume (a, b) mit unterschiedlichen Durchmessern vorliegen, wobei die auf der oberseitigen Fläche des Spannmittels befindliche Bohrung (a) einen kleineren Durchmesser zur passenden Aufnahme eines mit einem Bolzenkopf (5a), Schaft (5b) und einem endständigem Gewinde (5c) versehenen Spannbolzens (5) aufweist, und die andere auf der unterseitigen Fläche des Spannmittels befindliche Bohrung (b) einen größeren Durchmesser aufweist und mit dem aufzunehmenden Spannbolzen einen ringförmigen Hohlraum (b') zu bilden vermag, in dem mindestens eine besagte elastomere Schicht oder Scheibe (4) untergebracht ist, welche mit einer zentrischen Bohrung im Durchmesser des besagten Spannbolzens versehen ist und die Bohrungen (c), die in besagtem ringförmigen Hohlraum (b') enden, abschließt.
Gegenstand der Erfindung ist das erfindungsgemäße Spannmittel (1) in Form einer Spannmutter oder eines Spannringes. Dabei kann die erfindungswesentliche Elastomerschicht oder - Scheibe entweder als auswechselbares Teil oder aber als fest mit dem Profilkörper verbundenes Element vorliegen. Falls die Verbindung der Bauteile wieder gelöst werden sollen, ist vorzugsweise eine auswechselbare Elastomerscheibe einzusetzen. Auch die Spannelemente (2, 3) sowie die optionale Druckscheibe (6) können in die/den Spannmutter/Spannring integriert sein, oder aber auswechselbar sein.

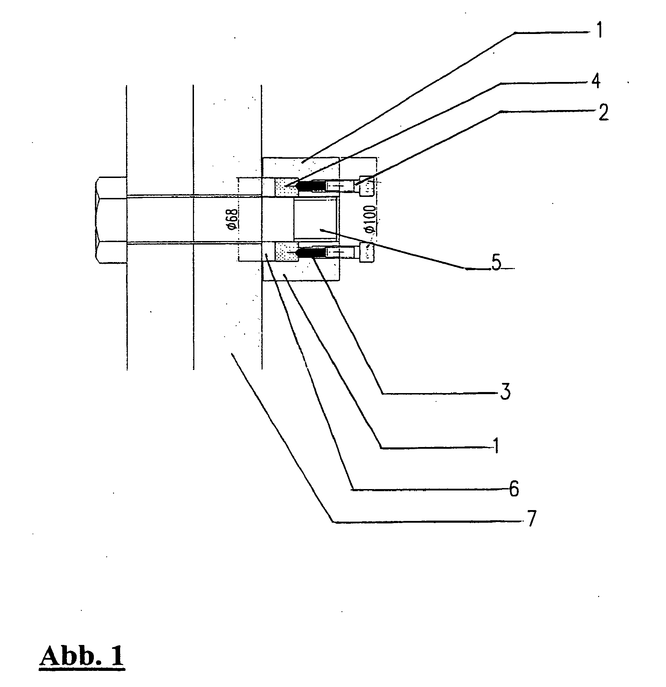

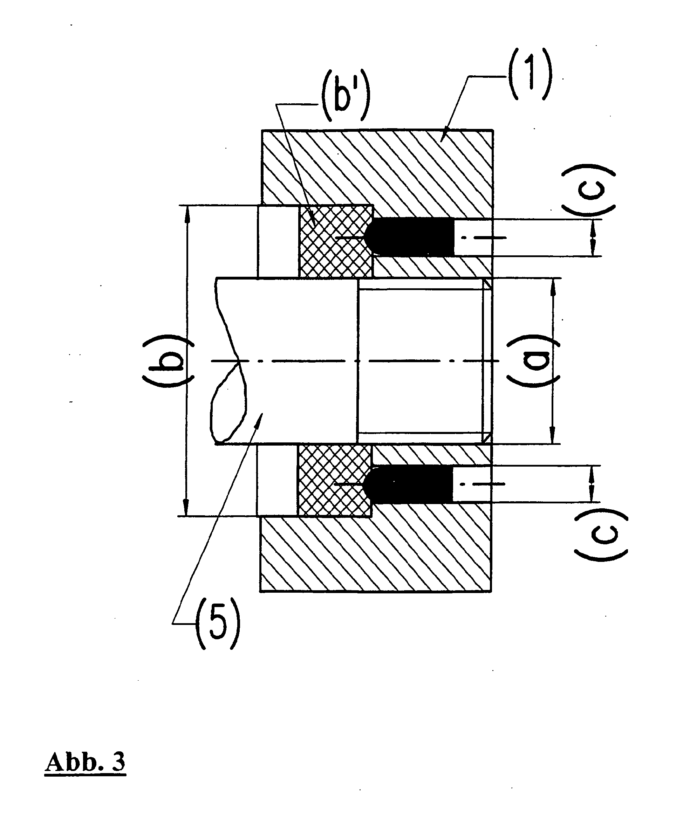

Ein entsprechendes erfindungsgemäßes Spannmittel, bzw. der entsprechende Profilhohlkörper (1a) ist beispielsweise in den Abbildungen 1 und 3 wiedergegeben.

Das erfindungsgemäße Spannmittel (1, 1a) kann eine mit Innengewinde versehene, Spannelemente enthaltene Mutter oder ein gewindeloser Ringhohlkörper sein. Vorzugsweise ist es eine Mutter.
Gegenstand der Erfindung ist somit eine entsprechende Befestigungsvorrichtung, bei welcher das Kraft reduzierende Spannmittel (1) eine Spannmutter ist, bei der die Bohrung (a) ein Innengewinde aufweist und auf das endständige Gewinde (5c) des Spannbolzens (5) geschraubt ist, und die zu verspannenden Bauteile (7) gewindelose Bohrungen aufweisen und auf den Spannbolzen zwischen Bolzenkopf (5a) und Spannelemente (2, 3) enthaltene Spannmutter gesteckt sind.

Während in der oben beschriebenen Anordnung die zu verspannenden Bauteile durch Verschraubung von Bolzen und Mutter verbunden werden, kann in einer anderen erfindungsgemäßen Ausführungsform die Verschraubung des Bolzens mit einem oder mehreren zu verspannenden Bauteilen selbst erfolgen, welche in diesem Fall eine Gewindebohrung aufweisen und so die Funktion einer Mutter übernehmen. Die eigentliche Verspannung erfolgt hier durch einen Spannring, der auf den Bolzen zwischen Bolzenkopf und zu verspannendem Bauelement gesteckt ist und durch Betätigung der im Ring befindlichen Spannelemente eine Dehnung des Bolzenschaftes und damit die Verspannung der Teile gegeneinander bewirkt.
Gegenstand der Erfindung ist somit eine entsprechende Spannvorrichtung, bei der das Kraft reduzierende Spannmittel (1) eine gewindeloser Spannring ist, der auf den Spannbolzen (5) zwischen Bolzenkopf (5a) und zu verspannenden Bauteilen (7) gesteckt ist, wobei zumindest das am Schaft (5b) befindliche abschließende Bauteil (7) eine Gewindebohrung zur Aufnahme des endständigen Gewindes (5c) des Spannbolzens aufweist.

Spannmutter bzw. Spannring enthalten Bohrungen (c) zur Aufnahme von Spannelementen (2, 3), insbesondere Spannschrauben (2) gegebenenfalls in Kombination mit Druckstiften oder Druckbolzen (3).
Die Bohrungen, die im Hohlraum (b, b') enden, können erfindungsgemäß prinzipiell an beliebiger Stelle auf dem Profilkörper (1a) angebracht sein. Eine spezielle Anordnung oder Ausrichtung ist aus funktionalen Gründen also nicht erforderlich. So können sie axial oder radial zum Bolzen (5) angebracht sein. Auch Schrägstellungen sind möglich, ohne dass nennenswerte störende Querkräfte auf Bolzen oder Bauteile beim Verspannen mittels der Spannelemente (2, 3) auftreten. Die Bohrungen können symmetrisch wie auch asymmetrisch im Umkreis auf dem Profilkörper (1a) mit gleichen oder unterschiedlichen Radien angebracht sein. Vorzugsweise sind sie axial oder radial angeordnet.
Gegenstand der Erfindung ist somit insbesondere eine Befestigungsvorrichtung, bei der die Bohrungen (c) längs oder senkrecht zur zentrischen Bohrung (a) im Profilhohlkörper (1a) angeordnet sind.

Gegenstand der Erfindung ist insbesondere eine entsprechende Vorrichtung, bei der die Bohrungen (c) neben einem Gewindebereich einen gewindelosen Abschnitt zur Aufnahme eines Druckbolzens (3) aufweisen, welcher unterhalb des Gewindeteils und unmittelbar oberhalb der angrenzenden im Hohlraum (b') befindlichen Elastomerschicht angeordnet ist. Die Druckbolzen haben die Aufgabe, zu verhindern, dass die Schrauben (2) in direkten Kontakt mit der Elastomerschicht kommen und diese beim Eindrehen in den Gewindeteil beschädigen.
Die Fläche des Querschnitts der Spannschraube (2) bzw. des Druckbolzens (3), die mit der Elastomerschicht - Scheibe in Berührung kommt ist, wie bereits oben genannt, maßgeblich für das aufzubringende Anzugs-Drehmoment. Durch unterschiedliche Durchmesser der Bohrungen / Schrauben / Druckstifte kann so erfindungsgemäß dieses Drehmoment festgelegt werden. So können beispielsweise zunächst die größeren Schrauben (2) mit einem entsprechend verringertem Drehmoment (und geringerer Kraft) mäßig angezogen werden, um eine bestimmte Vorspannung zu erhalten. Anschließend kann dann mittels der kleineren Schrauben die Verspannung bis an die Elastizitätsgrenze des Materials sukzessive ohne größere Kraftanstrengung durchgeführt werden.
Gegenstand der Erfindung ist demnach eine entsprechende Spannvorrichtung, bei der die Bohrungen (c) sowie die Spannelemente (2, 3) unterschiedliche Durchmesser besitzen.

In einer weiteren besonderen Ausführungsform enthält der Profilkörper (1a) einen Scheibe (6) aus einem deutlich härterem Material als die Elastomerschicht/-Scheibe (4). Diese Scheibe (6) ist beweglich und schließt den Profilkörper gegenüber dem unmittelbar angrenzenden und zu verspannenden Bauteil (7) ab. Sie hat die Aufgabe, zu verhindern das Elastomermaterial aus den Profilkörper heraus bzw. zwischen Profilkörper und Bauelement (7) durch den erzeugten hohen Druck gequetscht wird. Sie wird im Gegensatz zur Druckscheibe aus der DE 35 10 926 hingegen nicht zur Erzeugung oder Aufrechterhaltung der Klemmkräfte benötigt.
Gegenstand der Erfindung ist somit entsprechendes Befestigungsmittel, bei dem im Hohlraum (b') sich eine Scheibe (6) aus hartem Material mit einer zentrischen Bohrung für den Schraubbolzen (5) befindet, welche unterhalb der elastomeren Schicht / Scheibe (4) angeordnet ist und den Hohlraum (b') zur Seite der zu verspannenden Bauteile (7) abschließt.

Mit den erfindungsgemäßen Befestigungsmitteln können nicht nur Befestigungsbolzen von etwa 25 - 120 mm Durchmesser unter regelbaren und akzeptablen Kraftaufwand verschraubt bzw. gespannt werden, sondern es können auch Konstruktionen verspannt werden, bei denen die zu verspannenden Teile nicht streng plan zu einander ausgerichtet werden können. In solchen in der Praxis häufig vorkommenden Fällen bewirken die auftretenden einseitigen kardanischen Kräfte in den bekannte Vorrichtungen eine extreme und oft zu hohe Belastung der beteiligten Elemente. Diese Kräfte werden durch das erfindungsgemäße System aufgrund der verwendeten Elastomerelemente und ihrer Anordnung gleichmäßig verteilt und ausgeglichen.
Gegenstand der Erfindung ist somit die Verwendung eines entsprechenden Befestigungsmittels zur Verspannung nicht plan zu einander angeordneter Bauteile, sowie zur Verringerung der aufzuwendenden Kraft bei der Verspannung von Bauteilen, die große Befestigungselemente, insbesondere Schraubbolzen mit Durchmessern von >= 35 mm, erfordern.

Es folgt eine kurze Beschreibung der Abbildungen und der verwendeten Bezugsgrößen:
Abb. 1 stellt eine erfindungsgemäße Befestigungsvorrichtung bestehend aus einem Bolzen (5. 5a-c) zwei Bauteilen (7), die auf den Bolzenschaft (5b) gesteckt sind, sowie dem eigentlichen Spannmittel (1), der aus einer Profilhohlkörperkonstruktion (1a) besteht und die erfindungswesentliche Elastomerschicht-Scheibe (4) sowie die Spannelemente (2, 3) enthält. Das als Spannmutter ausgebildete Spannmittel ist auf das endständige Gewinde des Bolzens aufgeschraubt. Der innere Abschluss des Profilkörpers bildet die Scheibe (6), die verhindern soll, dass Elstomermaterial aus dem Profilkörper herausgepresst wird.

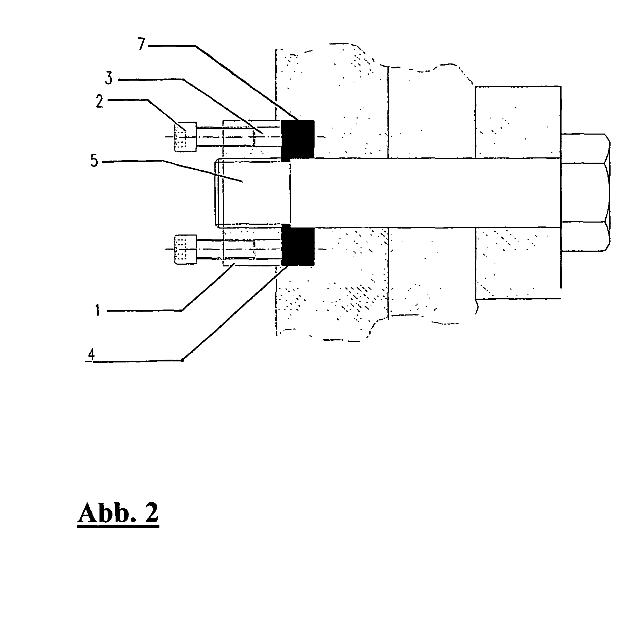

Abb. 2 stellt ein zu Abb. 1 analoges Befestigungssystem dar, bei dem die Spannmutter nicht auf dem Bauteil (7) aufsitzt, sondern in eine entsprechend geformte zylindrische Vertiefung an dem angrenzenden Bauteil (7) versenkt ist, welche bewirkt, dass das Elastomerteil (4) auch ohne Druckscheibe (6) nicht bei Belastung austreten kann.
Abb. 3 zeigt den Profilhohlkörper (1a) des Spannmittels (1) in der andeutungsweise ein Teil des Bolzens (5) zu sehen ist, der in dem zylindrischen Hohlraum (a) passend Platz findet. Der mit dem größeren Durchmesser versehene Zylindrische Hohlraum (b) wird bei Einschieben des Bolzens zu dem ringförmigen Hohlraum (b') reduziert, welcher von der Elastomerscheibe (4) zum größten Teil ausgefüllt ist. Die Scheibe besitzt eine zentrisch angeordnete Öffnung zur Aufnahme des Schraubbolzens (5) und hat Kontakt mit den axial angeordneten Bohrungen (c), welche einen Gewindeabschnitt zur Aufnahme einer Spannschraube und gegebenenfalls einen Druckstift enthalten. Der Zylindrische Hohlraum (a) ist im Falle eines Spannrings ohne Gewinde, im Falle einer Mutter jedoch mit Gewinde versehen, welches im Bereich der Fläche (d) angeordnet ist.

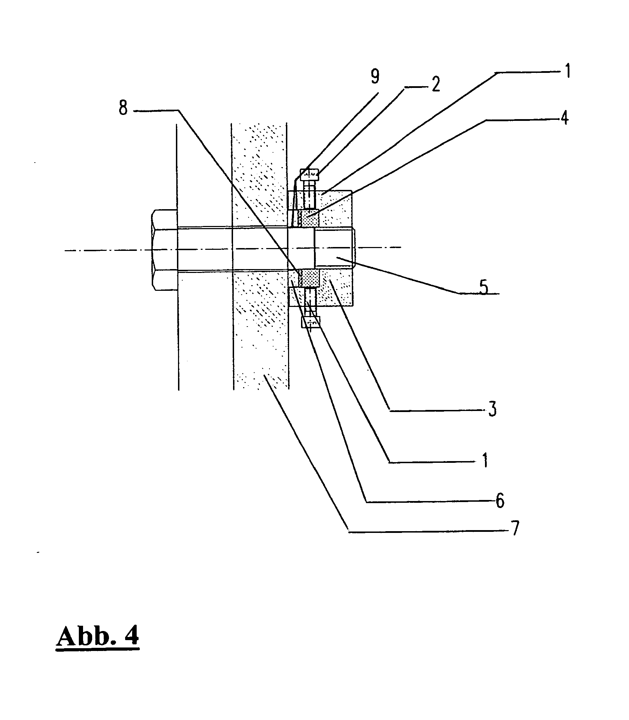

Abb. 4 zeigt ein Befestigungssystem analog Abb. 1, jedoch mit Spannelementen (2, 3) in entsprechenden Bohrungen, die radial zum Bolzen (5) angeordnet sind.

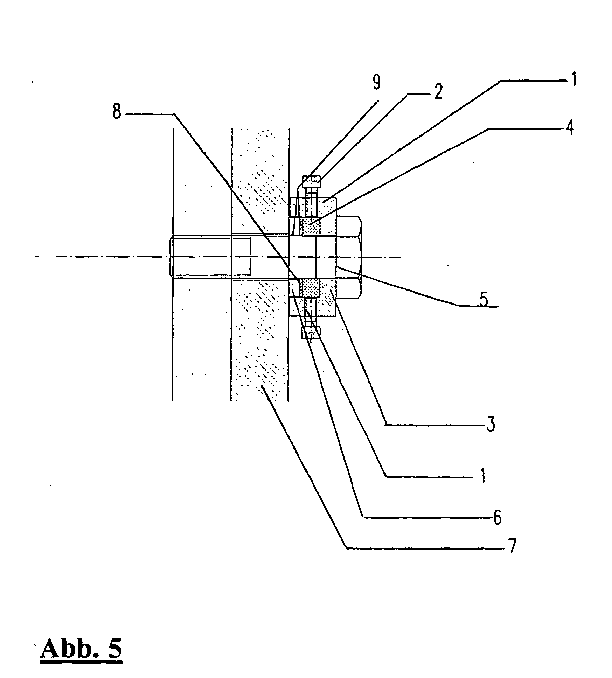

Abb. 5 zeigt einen Spannring (1), der zwischen Bolzenkopf (5a) und Bauteilen (7) angeordnet ist und Spannelemente (2, 3) aufweist, die senkrecht (radial) zur Bolzenachse ähnlich wie in Abb. 4. angeordnet sind. Das endständige Gewinde (5c) ist in das zu verspannende Bauteil (7b) eingeschraubt.

| Nr. | Bedeutung der Bezugsgröße |
|---|---|
| 1 | Spannmutter, Spannring |
| 1a | Profilhohlkörper des Spannmittels (1) |
| 2, 2' | Spannschraube |
| 3, 3' | Druckbolzen |
| 4 | Elastonmerschicht - Ring |
| 5 | Befestigungsbolzen (-Schraube) |
| 5a | Bolzenkopf |
| 5b | Bolzenschaft |
| 5c | Endständiges Bolzengewinde |
| 6 | Abschluss- oder Druckscheibe |
| 7 | Zu verspannende Bauteile |
| 7a,b | äußeres und inneres zu verspannendes Bauteil |
| 8 | Elastomerschicht - hart |
| 9 | Spalte zwischen Profilkörper (1, 1a) und Bauteil |
| a | zylindrische Bohrung für Befestigungsbolzen |
| b | zylindrische Profilbohrung zur Aufnahme des Rings (4) + Bolzenschaft (5b) |
| b' | zylindrischer Ringraum für Elastomerring (4) |
| c | Zylindrische Bohrung für Spannelemente (2) und (3) |

Der Vorgang des Verspannens gemäß des erfindungsgemäßen Befestigungs- bzw. Spannmittels geschieht, wie folgt dargelegt:
Auf den Schraubbolzen (5) werden die zu verspannenden Bauteile (7a), (7b) gesteckt, die eine entsprechende Bohrung (a) aufweisen. Die Spannmutter (1) in Form des Profilhohlkörpers wird nun auf das endständige Gewinde des Bolzens aufgeschraubt und leicht gegenüber den Bauteilen festgezogen. Dies kann im einfachsten Fall auch händisch ohne Aufbringung eines größeren Drehmomentes erfolgen. Die Bohrung (c) im Hohlkörper enthält im oberen, den Bauteilen (7) abgewandten Teil einen Gewindeabschnitt zum Einschrauben der Schraube (2). Der untere gewindelose Abschnitt der Bohrung (c) weist eine Druckkolben oder - Stift (3) aus üblichen harten Materialien auf. Dieser wird nun durch die sich einschraubende Schraube (2) teilweise aus der Bohrung (c) in den unterhalb befindlichen ringförmigen Raum b' des Hohlkörpers (1a), in welchem sich das Elastomer befindet, geschoben. Der Stift (3), der zwischen Schraube (2) und Elastomer (4) im gewindefreien Teil der Bohrung (c) angeordnet ist, soll verhindern, das die Schraube direkt mit dem Elastomer in Kontakt kommt, darin eindringt und es zerstört. Durch das Einschieben des Druckstiftes (3) in die per se komprimierbare Elastomerschicht, wird ein Druck erzeugt, den die Elastomerschicht nach allen Richtungen gleichmäßig, analog der Flüssigkeit eines hydraulischen Systems, weitergibt; somit also auf den Bolzenschaft (5b), auf den das Elastomer aufgesteckt ist, vor allem aber in Richtung des offenen Endes des Profilkörpers auf das Bauteil (7a), das durch das anfängliche Aufschrauben mit der Spannmutter / Spannring in Verbindung steht. Durch diesen Druck in Richtung der Bolzenachse wird eine Kraft erzeugt, die den Profilhohlkörper, bzw. Spannmutter / Spannring von dem zu verspannenden Bauteilen (7) wegdrückt, so dass der Spannbolzen (5) gedehnt wird und ein Festziehen/Verspannen der Verbindung erfolgt.
Die Gummischicht (4) kann aus unterschiedlich steifen Elastomer-Werkstoffen bestehen. Während die Schicht im Bereich der eindringenden Schrauben / Druckbolzen relativ leicht verformbar sein sollte (Härte zwischen etwa 30 bis 90 Shore A) ist es erfindungsgemäß vorteilhaft, wenn die gegenüber liegende Schicht, die den Druck auf die Bauteile weitergibt, eine höhere Steifigkeit aufweist (etwa 70 - 90 Shore D). Dies ist besonders dann gewünscht, wenn keine eigene Druckscheibe (6) zwischen Bauteil und Elastomerring verwendet wird. Dies kann erreicht werden durch Verwendung zweier Elastomerschichten (4, 8) unterschiedlicher Härte, die lose aufeinander gesteckt oder miteinander, beispielsweise durch Verkleben, fest verbunden sind, oder aber nur einer Elastomerschicht, die aufgrund ihrer Herstellung die besagten unterschiedlichen Härtebereiche aufweist. Im Falle zweier Schichten, weist die Schicht (8) eine höhere Steifigkeit auf als die Schicht (4). Die zwei Elastomerschichten unterschiedlicher Härte , bzw. die eine Elastomerschicht mit zwei unterschiedlichen Härten bewirken/ bewirkt, dass bei den auftretenden hohen Drucken kein Elastomermaterial mit geringere Steifigkeit durch die Spalte (9) zwischen Bauteil (7, 7a) und Profilkörper (1a) herausgedrückt wird. Dies ist von Vorteil, wenn die Fertigung des Profils des Hohlkörpers mit geringere Genauigkeit bzw. größeren Toleranzen erfolgte.

Um letzteres zu verhindern, ist es erfindungsgemäß vorteilhaft, zusätzlich, bzw. anstatt der Schichten mit unterschiedlicher Steifigkeit, ein Druckscheibe (6) aus Metall oder hartem Kunststoff oder aus Keramik zu verwenden, die auf den Bolzenschaft (b), passend in den Hohlraum (b), zwischen Bauteil und Profilkörper aufgesteckt ist. Diese ist es dann, die aus dem Profilhohlkörper teilweise heraus geschoben wird und den Druck auf die Bauteile (7) weitergibt.
Eine andere Ausführungsform ist in Abb. 2 dargestellt. In diesem Fall ist das Spannelement (2, 3) ein integraler Bestandteil des zu verspannenden Bauteils (7a). Dabei ist die Spannmutter, bzw. der Spannring in eine entsprechend geformte und dimensionierte Vertiefung des betreffenden Bauteils versenkt, so dass verhindert werden kann, dass selbst bei fehlender Druckscheibe (6) Elastomermaterial (geringerer Steifigkeit) aus dem Spalt (9) der zu verspannenden Verbindung herausgedrückt werden kann.
Wie bereits oben beschrieben, kann der Profilkörper (1) auch als gewindeloser Spannring analog Abb. 5 eingesetzt werden. Die Funktionsweise entspricht dem oben Geschilderten, mit der Ausnahme, dass das Spannelement sich nunmehr zwischen Bolzenkopf (5a) und zu verspannenden Bauteilen (7) befindet und die Vorspannung durch Einschrauben and Halten des Bolzens in ein entsprechendes Gewinde im Bauteil (7b) am gegenüberliegenden Ende erzeugt wird.

Die Elastomermaterialen gemäß der vorliegenden Erfindung bestehen im wesentlichen aus Naturkautschuk, einem Naturkautschukderivat oder aus einem geeigneten elastischen polymeren Kunststoff oder Kunststoffgemisch der geeigneten Härte. Die Herstellung derartiger Elastomere ist im Stande der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk. Isopren-, Butadien- , Chloropren-, Styrolbutadien-, Butyl-, Ethylenpropylen-, Nitril-, Polyurethan-, Acrylat-, Ethylenacrylat-, Silicon- oder Fluor-Kautschuke bzw. Kunststoffe.
Da der Befestigungsbolzen (5) bei dem erfindungsgemäßen System letztlich weich gelagert ist, werden bei einer Befestigung von Bauteilen mit zwei oder mehr Bolzen, gegebenenfalls über entsprechende Flanschstücke, die Bolzen trotz einer möglichen Schiefstellung der Auflageflächen der Flansche kardanisch weit weniger belastet als bei einem entsprechenden System des Standes der Technik. Dieser Vorteil ist allerdings auch bereits zu erzielen, ohne dass der Profilkörper Bohrungen (c) mit entsprechenden Spannelementen aufweist, also ohne dass von der erfindungsgemäßen Kraftreduzierung Gebrauch gemacht werden soll.

In einem typischen Beispiel der Erfindung soll eine Schraube (5) M 72 (72 mm) mit 2400KN (das entspricht 200 Tonnen) vorgespannt werden. Dazu würde ein Anzugsdrehmoment von 30.000 Nm benötigt, was nicht mehr ohne größere Hilfsmittel aufgebracht werden könnte (man müsste an einem 1m Hebel mit der Kraft von 30.00N entsprechend 3 Tonnen anziehen). Bei einem Durchmesser der Spannmutter (1) von 150 mm und einem Druckbolzen (3) / Spannschraube (2) mit dem Durchmesser von 20mm wird ein vermindertes Anzugsdrehmoment von ca.200 Nm benötigt. Nimmt man für das Fein-Anziehen einen Druckbolzen von 10mm, so wird nur noch ein Anzugsmoment von ca. 25 Nm benötigt. Die Druckschrauben (2) bzw. Bolzen (3) können erfindungsgemäß unterschiedlichen Durchmessern besitzen. So kann beim Vorspannen für die großen Wege (z.B. Setzen und Anpassen der Flanschflächen, Ausfüllen des Hohlraumes (b') mit dem Elastomer (4) erst die größere Schraube (2) bzw. der größere Bolzen (3) eingedrückt werden. Beim Festziehen mit großer Last kann dann die kleinere Schraube (2') bzw. der kleinere Bolzen (3') verwendet werden. Geeignete Durchmesser (c) variieren in diesem Fall zwischen 25 und 5 mm.

## Patentansprüche

1. Befestigungsvorrichtung zum Verspannen von Bauteilen (7), bestehend im wesentlichen aus einem Spannbolzen (5) mit Bolzenkopf (5a), Schaft (5b) und einem endständigem Gewinde (5c) sowie einem Kraft reduzierenden Spannmittel (1), wobei die Bauteile (7) passende Bohrungen zur Aufnahme des Spannbolzens aufweisen, und das Kraft reduzierende Spannmittel die Form eines Profil-Hohlkörpers (1a) hat, welcher eine zentrisch angeordnete durchgehenden Bohrung aufweist, und in dessen Peripherie eine oder mehrere Bohrungen (c) angeordnet sind, die selbst Spannelemente (2, 3) aufweisen, welche beim Verspannen mit einer Elastomerschicht (4) in Kontakt stehen,
**dadurch gekennzeichnet, dass** der Durchmesser der besagten zentrisch angeordneten durchgehenden Bohrung des Profil-Hohlkörpers (1a) sich innerhalb des Werkstückes so verändert, dass zwei zylindrische, ineinander übergehende Hohlräume (a, b) mit unterschiedlichen Durchmessern vorliegen, wobei der auf der den zu verspannenden Bauteilen abgewandten Fläche des Spannmittels (1) befindliche zylindrische Hohlraum (a) einen kleineren Durchmesser zur passenden Aufnahme des Spannbolzens (5) aufweist, und die andere auf der den zu verspannenden Bauteilen zugewandten Seite befindliche Bohrung (b) einen größeren Durchmesser aufweist und einen ringförmigen Hohlraum (b') mit besagtem eingeführten Spannbolzen bildet, in welchem mindestens eine besagte elastomere Schicht oder Scheibe (4) untergebracht ist, welche mit einer zentrischen Bohrung im Durchmesser des Spannbolzens (5) versehen ist und die Bohrungen (c), die in besagtem ringförmigen Hohlraum (b') enden, abschließt.

2. Befestigungsvorrichtung nach Anspruch 1, **dadurch gekennzeichnet, dass** das Kraft reduzierende Spannmittel (1) eine Spannmutter ist, bei der die Bohrung (a) ein Innengewinde aufweist und auf das endständige Gewinde (5c) des Spannbolzens (5) geschraubt ist, und die zu verspannenden Bauteile (7) gewindelose Bohrungen aufweisen und auf den Spannbolzen zwischen Bolzenkopf (5a) und Spannmutter gesteckt sind.

3. Befestigungsvorrichtung nach Anspruch 1, **dadurch gekennzeichnet, dass** das Kraft reduzierende Spannmittel (1) eine gewindeloser Spannring ist, der auf den Spannbolzen (5) zwischen Bolzenkopf (5a) und zu verspannenden Bauteilen (7) gesteckt ist, wobei zumindest das am Schaft (5b) befindliche abschließende Bauteil (7) eine Gewindebohrung zur Aufnahme des endständigen Gewindes (5c) des Spannbolzens aufweist.

4. Befestigungsmittel nach einem der Ansprüche 1 - 3, **dadurch gekennzeichnet, dass** die Bohrungen (c) längs oder senkrecht zur zentrischen Bohrung (a) im Profilhohlkörper (1a) angeordnet sind.

5. Befestigungsmittel nach einem der Ansprüche 1 - 4, **dadurch gekennzeichnet, dass** die Bohrung (c) einen Gewindeabschnitt aufweist und das Spannelement (2, 3) eine Schraube (2) ist, welche in den Gewindeteil der Bohrung eingeschraubt ist.

6. Befestigungsmittel nach Anspruch 5, **dadurch gekennzeichnet, dass** die Bohrung (c) neben einem Gewindebereich einen gewindelosen Abschnitt zur Aufnahme eines Druckbolzens (3) aufweist, welcher unterhalb des Gewindeteils und unmittelbar oberhalb der angrenzenden im Hohlraum (b') befindlichen Elastomerschicht angeordnet ist.

7. Befestigungsmittel nach Anspruch 5 oder 6, **dadurch gekennzeichnet, dass** die Bohrungen (c) sowie die Spannelemente (2, 3) unterschiedliche Durchmesser besitzen.

8. Befestigungsmittel nach einem der Ansprüche 1 - 7, **dadurch gekennzeichnet, dass** der Hohlraum (b') eine Scheibe aus hartem Material (6) mit einer zentrischen Bohrung für den Schraubbolzen (5) aufweist, welche unterhalb der elastomeren Schicht / Scheibe (4) angeordnet ist und den Hohlraum (b') zur Seite der zu verspannenden Bauteile (7) abschließt.

9. Verwendung eines Befestigungsmittels gemäß einem der Ansprüche 1 - 8 zur Verspannung nicht plan zu einander angeordneter Bauteile.

10. Verwendung eines Befestigungsmittels gemäß einem der Ansprüche 1 - 8 zur Verringerung der aufzuwendenden Kraft bei der Verspannung von Bauteilen, die große Befestigungselemente, insbesondere Schraubbolzen (5) mit Durchmessern von >= 35 mm, erfordern.

11. Kraft reduzierendes Spannmittel (1) in Form eines Profil-Hohlkörpers (1a) mit einer zentrisch angeordneten durchgehenden Bohrung (a), und eine oder mehrere Bohrungen (c), welche längs, schräg oder senkrecht zu dieser auf einem Umkreis des Spannmittels angeordnet sind und Spannelemente (2, 3) aufnehmen, **dadurch gekennzeichnet, dass** der Durchmesser der besagten zentrisch angeordneten durchgehenden Bohrung (a) des Profil-Hohlkörpers (1a) sich innerhalb des Werkstückes so verändert, dass zwei zylindrische, ineinander übergehende Hohlräume (a, b) mit unterschiedlichen Durchmessern vorliegen, wobei die auf der oberseitigen Fläche des Spannmittels befindliche Bohrung (a) einen kleineren Durchmesser zur passenden Aufnahme eines mit einem Bolzenkopf (5a), Schaft (5b) und einem endständigem Gewinde (5c) versehenen Spannbolzens (5) aufweist, und die andere auf der unterseitigen Fläche des Spannmittels befindliche Bohrung (b) einen größeren Durchmesser aufweist und mit dem aufzunehmenden Spannbolzen einen ringförmigen Hohlraum (b') zu bilden vermag, in dem mindestens eine besagte elastomere Schicht oder Scheibe (4) untergebracht ist, welche mit einer zentrischen Bohrung im Durchmesser des besagten Spannbolzens versehen ist und die Bohrungen (c), die in besagtem ringförmigen Hohlraum (b') enden, abschließt.

12. Spannmittel nach Anspruch 11 in Form einer Spannmutter, **dadurch gekennzeichnet, dass** die zylindrische Bohrung (a) ein Innengewinde aufweist.

13. Spannmittel nach Anspruch 11 oder 12 in Form einer Spannmutter oder eines Spannringes, **dadurch gekennzeichnet, dass** der Hohlraum (b') eine Scheibe (6) aus hartem Material mit einer zentrischen Bohrung im Durchmesser der Spannschraube (5) aufweist, welche den Hohlraum (b) abschließt.

14. Spannmutter oder Spannring nach einem der Ansprüche 11 - 13, **dadurch gekennzeichnet, dass** die Bohrungen (c) eine Gewinde zur Aufnahme von Spannschrauben (2) aufweisen.

15. Spannmutter oder Spannring nach Anspruch 14, **dadurch gekennzeichnet, dass** die Bohrungen (c) gleichen oder unterschiedlichen Durchmesser haben zur Aufnahme von Spannschrauben (2) mit gleichem oder unterschiedlichen Durchmessern.

16. Spannmutter oder Spannring nach Anspruch 14 oder 15, **dadurch gekennzeichnet, dass** die Bohrungen (c) neben einem Gewindebereich einen gewindelosen Abschnitt zur Aufnahme von Druckbolzen (3) aufweisen, welcher unterhalb des Gewindeteils und oberhalb der angrenzenden Elastomerschicht angeordnet ist.

## Claims

1. Fastening device for clamping components (7), essentially consisting of a clamping bolt (5) with bolt head (5a), shaft (5b) and a thread (5c) on the end, and a force-reducing clamping means (1), where the components (7) have suitable holes for receiving the clamping bolt, and the force-reducing clamping means has the form of a profiled hollow body (1a), which has a centrally arranged through-hole and in the periphery of which are arranged one or more holes (c), which themselves have clamping elements (2, 3) which are in contact with an elastomer layer (4) during clamping,
**characterised in that** the diameter of the said centrally arranged through-hole of the profiled hollow body (1a) changes within the workpiece in such a way that two cylindrical cavities (a, b) with different diameters which run into one another are present, where the cylindrical cavity (a) located on the face of the clamping means (1) that faces away from the components to be clamped has a smaller diameter for accurately receiving the clamping bolt (5), and the other hole (b) located on the side that faces the components to be clamped has a larger diameter and, with said inserted clamping bolt, forms an annular cavity (b') in which is accommodated at least one said elastomeric layer or disk (4), which is provided with a central hole in the diameter of the clamping bolt (5) and terminates the holes (c) which end in said annular cavity (b').

2. Fastening device according to Claim 1, **characterised in that** the force-reducing clamping means (1) is a clamping nut in which the hole (a) has an internal thread and is screwed onto the thread (5c) on the end of the clamping bolt (5), and the components (7) to be clamped have threadless holes and are pushed onto the clamping bolt between bolt head (5a) and clamping nut.

3. Fastening device according to Claim 1, **characterised in that** the force-reducing clamping means (1) is a threadless clamping ring which is pushed onto the clamping bolt (5) between bolt head (5a) and components (7) to be clamped, where at least the final component (7) located on the shaft (5b) has a threaded hole for receiving the thread (5c) at the end of the clamping bolt.

4. Fastening means according to Claims 1 - 3, **characterised in that** the holes (c) are arranged longitudinally or perpendicularly to the central hole (a) in the profiled hollow body (1a).

5. Fastening means according to Claims 1 - 4, **characterised in that** the hole (c) has a threaded section, and the clamping element (2, 3) is a screw (2) which is screwed into the threaded part of the hole.

6. Fastening means according to Claim 5, **characterised in that** the hole (c), in addition to a threaded section, has a threadless section for receiving a pressure bolt (3), which is arranged below the threaded part and immediately above the adjacent elastomer layer located in the cavity (b').

7. Fastening means according to Claim 5 or 6, **characterised in that** the holes (c) and the clamping elements (2, 3) have different diameters.

8. Fastening means according to Claims 1 - 7, **characterised in that** the cavity (b') has a disk of hard material (6) with a central hole for the screw bolt (5), which is arranged below the elastomeric layer / disk (4) and terminates the cavity (b') to the side of the components (7) to be clamped.

9. Use of a fastening means according to one of Claims 1 - 8 for clamping components not arranged flush with one another.

10. Use of a fastening means according to one of Claims 1 - 8 for reducing the force to be applied in the clamping of components which require large clamping elements, in particular screw bolts (5) having diameters of>= 35 mm.

11. Force-reducing clamping means (1) in the form of a profiled hollow body (1a) having a centrally arranged through-hole (a), and one or more holes (c) which are arranged longitudinally, obliquely or perpendicularly thereto on a circumcircle of the clamping means and receive clamping elements (2, 3), **characterised in that** the diameter of the said centrally arranged through-hole (a) of the profiled hollow body (1a) changes within the workpiece in such a way that two cylindrical cavities (a, b) with different diameters which run into one another are present, where the hole (a) located on the top face of the clamping means has a smaller diameter for accurately receiving a clamping bolt (5) provided with a bolt head (5a), shaft (5b) and a thread (5c) on the end, and the other hole (b) located on the bottom face of the clamping means has a larger diameter and, with the clamping bolt to be received, is capable of forming an annular cavity (b'), in which is accommodated at least one said elastomeric layer or disk (4), which is provided with a central hole in the diameter of the said clamping bolt and terminates the holes (c) which end in the said annular cavity (b').

12. Clamping means according to Claim 11 in the form of a clamping nut, **characterised in that** the cylindrical hole (a) has an internal thread.

13. Clamping means according to Claim 11 or 12 in the form of a clamping nut or clamping ring, **characterised in that** the cavity (b') has a disk (6) of hard material with a central hole in the diameter of the clamping screw (5) which terminates the cavity (b).

14. Clamping nut or clamping ring according to Claims 11-13, **characterised in that** the holes (c) have a thread for receiving clamping screws (2).

15. Clamping nut or clamping ring according to Claim 14, **characterised in that** the holes (c) have the same or different diameters for receiving clamping screws (2) with the same or different diameters.

16. Clamping nut or clamping ring according to Claim 14 or 15, **characterised in that** the holes (c), in addition to a threaded section, have a threadless section for receiving pressure bolts (3), which is arranged below the threaded part and above the adjacent elastomer layer.

## Revendications

1. Dispositif de fixation pour fixer des composants (7), constitué essentiellement par un boulon de fixation (5) comprenant une tête de boulon (5a), une tige (5b) et une partie filetée (5c) à son extrémité, et un moyen de fixation à réduction de force (1), dans lequel les composants (7) comprennent des trous appropriés pour recevoir le boulon de fixation, et le moyen de fixation à réduction de force présente la forme d'un corps creux profilé (1a), lequel comprend un trou traversant agencé centralement et au niveau de la périphérie duquel est/sont ménagé(s) un ou plusieurs trous (c), lesquels comprennent eux-mêmes des éléments de fixation (2, 3) qui sont en contact avec une couche en élastomère (4) pendant la fixation, **caractérisé en ce que** le diamètre dudit trou traversant agencé centralement du corps creux profilé (1a) varie à l'intérieur de la pièce de travail de telle sorte que deux cavités cylindriques (a, b) présentant des diamètres différents s'étendent l'une dans l'autre tandis que la cavité cylindrique (a) localisée sur la face du moyen de fixation (1) qui est dirigée vers l'extérieur par rapport aux composants à fixer présente un diamètre plus petit pour recevoir de façon précise le boulon de fixation (5) et tandis que l'autre trou (b) localisé sur le côté qui fait face aux composants à fixer présente un diamètre plus grand et, avec le boulon de fixation inséré, il forme une cavité annulaire (b') dans laquelle est logée au moins une dite couche ou un dit disque élastiquement (4) qui est muni(e) d'un trou central selon le diamètre du boulon de fixation (5) et qui termine les trous (c) qui débouchent dans ladite cavité annulaire (b').

2. Dispositif de fixation selon la revendication 1, **caractérisé en ce que** le moyen de fixation à réduction de force (1) est un écrou de fixation dans lequel le trou (a) comprend un filetage interne et est vissé sur le filetage (5c) sur l'extrémité du boulon de fixation (5), et les composants (7) à fixer comprennent des trous sans filetage et sont poussés sur le boulon de fixation entre la tête de boulon (5a) et l'écrou de fixation.

3. Dispositif de fixation selon la revendication 1, **caractérisé en ce que** le moyen de fixation à réduction de force (1) est une bague de fixation sans filetage qui est poussée sur le boulon de fixation (5) entre la tête de boulon (5a) et les composants (7) à fixer, dans lequel au moins le composant final (7) localisé sur la tige (5b) comprend un trou fileté pour recevoir le filetage (5c) à l'extrémité du boulon de fixation.

4. Moyen de fixation selon les revendications 1 - 3, **caractérisé en ce que** les trous (c) sont agencés longitudinalement ou perpendiculairement par rapport au trou central (a) dans le corps creux profilé (1a).

5. Moyen de fixation selon les revendications 1 - 4, **caractérisé en ce que** le trou (c) comprend une section filetée et l'élément de fixation (2, 3) est une vis (2) qui est vissée dans la partie filetée du trou.

6. Moyen de fixation selon la revendication 5, **caractérisé en ce que** le trou (c), en plus d'une section filetée, comprend une section non filetée pour recevoir un boulon de pression (3), qui est agencée sous la partie filetée et immédiatement sur la couche en élastomère adjacente située dans la cavité (b').

7. Moyen de fixation selon la revendication 5 ou 6, **caractérisé en ce que** le trou (c) et les éléments de fixation (2, 3) présentent des diamètres différents.

8. Moyen de fixation selon les revendications 1 - 7, **caractérisé en ce que** la cavité (b') comprend un disque en matériau dur (6) avec un trou central pour le boulon (5), lequel est agencé sous la couche / le disque en élastomère (4) et détermine la cavité (b') sur le côté des composants (7) à fixer.

9. Utilisation d'un moyen de fixation selon l'une des revendications 1 - 8 pour fixer des composants qui ne sont pas agencés sue un même niveau l'un par rapport à l'autre.

10. Utilisation d'un moyen de fixation selon l'une des revendications 1 - 8 pour réduire la force à appliquer lors de la fixation de composants qui nécessitent de grands éléments de fixation, en particulier des boulons (5) présentant des diamètres >= 35 mm.

11. Moyen de fixation à réduction de force (1) sous la forme d'un corps creux profilé (1a) comprenant un trou traversant agencé centralement (a) et un ou plusieurs trous (c) qui sont agencés longitudinalement, à l'oblique ou perpendiculairement par rapport à lui sur cercle extérieur du moyen de fixation et qui reçoivent des éléments de fixation (2, 3), **caractérisé en ce que** le diamètre dudit trou traversant agencé centralement du corps creux profilé (1a) varie à l'intérieur de la pièce de travail de telle sorte que deux cavités cylindriques (a, b) présentant des diamètres différents s'étendent l'une dans l'autre tandis que le trou (a) localisé sur la face supérieure du moyen de fixation présente un diamètre plus petit pour recevoir de façon précise le boulon de fixation (5) muni d'une tête de boulon (5a), d'une tige (5b) et d'un filetage (5c) sur son extrémité, et tandis que l'autre trou (b) localisé sur la face de fond du moyen de fixation présente un diamètre plus grand et, avec le boulon de fixation destiné à être reçu, il peut former une cavité annulaire (b') dans laquelle est logée au moins une dite couche ou un dit disque élastomérique (4) qui est muni(e) d'un trou central selon le diamètre du boulon de fixation (5) et qui termine les trous (c) qui débouchent dans ladite cavité annulaire (b').

12. Moyen de fixation selon la revendication 11 sous la forme d'un écrou de fixation, **caractérisé en ce que** le trou cylindrique (a) comprend un filetage interne.

13. Moyen de fixation selon la revendication 11 ou 12 sous la forme d'un écrou de fixation ou d'une bague de fixation, **caractérisé en ce que** la cavité (b') comprend un disque (6) en un matériau dur avec un trou central selon le diamètre de la vis de fixation (5) qui termine la cavité (b).

14. Moyen de fixation selon les revendications 11-13, **caractérisé en ce que** les trous (c) comprennent un filetage pour recevoir des vis de fixation (2).

15. Ecrou de fixation ou bague de fixation selon la revendication 14, **caractérisé(e) en ce que** les trous (c) ont des mêmes diamètres ou des diamètres différents pour recevoir des vis de fixation (2) avec des mêmes diamètres ou des diamètres différents.

16. Ecrou de fixation ou bague de fixation selon la revendication 14 ou 15, **caractérisé**(e) **en ce que** les trous (c), en plus d'une section filetée, comprennent une section non filetée pour recevoir des boulons de pression (3), qui est agencée sous la partie filetée et sur la couche en élastomère adjacente.
